# EUROPEAN PATENT APPLICATION

(11) **EP 4 312 193 A1**
(43) Date of publication of application: **31.01.2024**
(21) Application number: 22186830.0
(22) Date of filing: 26.07.2022
(51) Int. Cl.: G06V 10/32, G06V 10/82, G06V 10/77, G06V 10/94, G06N 3/00

(54) **IMPROVED IMAGE ACQUISITION FOR DEEP LEARNING APPLICATIONS**

(71) Applicant: Robovision, 9052 Zwijnaarde (BE)
(72) Inventor: WAEGEMAN, Tim, 9052 Zwijnaarde (BE)
(74) Representative: Rogiest, Wouter

(57) **Abstract**

The invention relates, amongst others, to a method for image acquisition, comprising: acquiring a reduced-dimensionality image comprising a relevant object by means of an acquisition means comprising one or more sensors for recording raw sensor data of said relevant object; feeding said reduced-dimensionality image to a neural network trained with respect to said relevant object; wherein said acquisition means further comprises an acquisition module, preferably a hardware-implemented module, and an acquisition interface connecting said one or more sensors to said acquisition module; wherein said acquiring comprises reducing a dimensionality of said raw sensor data according to a learned dimensionality reduction learned by means of a first set of training examples, said learned dimensionality reduction comprising a bandwidth-reducing operation learned based on said first set of training examples and being performed by one or more respective ones of said sensors, said bandwidth-reducing operation resulting in an amount of data being sent by said respective sensor over said acquisition interface being less than the amount of raw sensor data being recorded by the respective sensor.

## Description

### Field of the invention

The present invention relates to improved image acquisition methods and devices for deep learning applications. More specifically, embodiments of the present disclosure relate to dimensionality reduction of raw sensor data for improved deep learning inference by means of neural networks.

### Background art

There is a need for improved image acquisition, wherein the computational requirements of neural networks are considered as part of the image acquisition.

Current deep learning architectures involving neural networks typically depart from a standard pipeline of image acquisition and subsequent image processing, followed by deep learning inference steps based on neural networks, carried out sequentially and in one direction. Typically, image acquisition is the first step, providing an image with an original size (expressed, e.g., in pixel width and height) and original geometry, e.g., predefined aspect ratio, e.g., 4:3 or 3:2, and orientation, e.g., portrait or landscape. This original geometry and size is however commonly discarded in a next step, by scaling the image to square geometry irrespective of original geometry, and scaling down the image to some predetermined square size, e.g., 150 pixels, to obtain the input layer of the deep learning architecture. Depending on the case, also color information is discarded, yielding a greyscale or black and white image. This way, computational burden on the neural network is reduced, as small images yield faster deep learning inference, while preserving the information in a way that can be visually interpreted by a human.

Said standard pipeline is followed by, e.g., (Hua KL, Hsu CH, Hidayati SC, Cheng WH, Chen YJ. Computer-aided classification of lung nodules on computed tomography images via deep learning technique. Onco Targets Ther. 8:2015-2022; 2015; doi:10.2147/OTT.S80733) but is suboptimal in terms of computational resource usage.

WO 2017/139927 A1 discloses region proposals for image regions that include objects of interest. Feature maps from multiple layers of a convolutional neural network model are used. In one example a digital image is received and buffered. Layers of convolution are performed on the image to generate feature maps. The feature maps are reshaped to a single size. The reshaped feature maps are grouped by sequential concatenation to form a combined feature map. Region proposals are generated using the combined feature map by scoring bounding box regions of the image. Objects are detected and classified objects in the proposed regions using the feature maps. However, WO 2017/139927 A1 is overly complex and suboptimal in terms of computational resource usage.

US 2016/0292589 A1 discloses a system for machine learning model parameters for image compression, including partitioning image files into a first set of regions, determining a first set of machine learned model parameters based on the regions, the first set of machine learned model parameters representing a first level of patterns in the image files, constructing a representation of each of the regions based on the first set of machine learned model parameters, constructing representations of the image files by combining the representations of the regions in the first set of regions, partitioning the representations of the image files into a second set of regions, and determining a second set of machine learned model parameters based on the second set of regions, the second set of machine learned model parameters representing a second level of patterns in the image files. However, also US 2016/0292589 A1 is overly complex and lacks efficiency in terms of resource usage.

US 9,836,484 B1 discloses an image capture, curation, and editing system that includes a resource-efficient mobile image capture device that continuously captures images. The mobile image capture device is operable to input an image into at least one neural network and to receive at least one descriptor of the desirability of a scene depicted by the image as an output of the at least one neural network. The mobile image capture device is operable to determine, based at least in part on the at least one descriptor of the desirability of the scene of the image, whether to store a second copy of such image in a non-volatile memory of the mobile image capture device or to discard a first copy of such image from a temporary image buffer without storing the second copy of such image in the non-volatile memory. However, US 9,836,484 B1 does not provide means for effective acquisition in view of the deep learning inference at hand.

The present invention aims at addressing the issues listed above.

### Summary of the invention

According to a first aspect of the present invention, a method for image acquisition is provided, comprising:
acquiring (1, 1') a reduced-dimensionality image (2) comprising a relevant object (50) by means of an acquisition means (51, 52, 53) comprising one or more sensors (51, 51a) for recording raw sensor data (11, 11a-d, 50a-c) of said relevant object (50);
feeding said reduced-dimensionality image (2) to a neural network trained with respect to said relevant object (50);
wherein said acquisition means further comprises an acquisition module (53), preferably a hardware-implemented module, and an acquisition interface (52) connecting said one or more sensors to said acquisition module (53);
wherein said acquiring comprises reducing a dimensionality of said raw sensor data (11, 11a-d, 50a-c) according to a learned dimensionality reduction learned by means of a first set of training examples (21a-e), said learned dimensionality reduction comprising a bandwidth-reducing operation learned based on said first set of training examples (21a-e) and being performed by one or more respective ones of said sensors (51, 51a), said bandwidth-reducing operation resulting in an amount of data being sent by said respective sensor over said acquisition interface (52) being less than the amount of raw sensor data being recorded by the respective sensor.

Herein, said learned dimensionality reduction learned by means of a first set of training examples relates to automated learning. Particularly, at least the bandwidth-reducing operation relates to automated learning. Examples thereof may include deep learning based on semantic segmentation NNs and/or instance segmentation NNs as explained further in this document. Likewise, the training of the neural network on reduced-dimensionality training examples relates to automated training, wherein the neural network may, e.g., comprise a semantic segmentation NN and/or an instance segmentation network. Furthermore, said reducing of dimensionality preferably relates to automated feature selection and/or automated feature extraction, which may relate to, e.g., one or more of PCA, ICA, SFA, SoftMax layer within sensor, information correlation. Examples of dimensionality reduction include a trained region of interest, a trained non-uniform spatial resolution, or a combination thereof.

A main advantage of such a method is the reduced burden on computing resources at the deep learning stage. Reducing the amount of data to be sent over the acquisition interface may allow for a more effective and less expensive acquisition module design. Additionally, it may provide a reduction of the overall data to be processed by the neural network, which may lead to, e.g., more efficient resource usage and/or lower power consumption and/or lower battery requirements and/or improved battery life and/or faster deep learning inference.

In contrast to prior art methods, wherein the input layer is obtained by mere scaling and downsizing of raw image data, the invention provides dimensionality reduction, wherein the dimensionality reduction is trained with respect to the relevant object, and hence is based on relevance to the deep learning application at hand. By pushing the dimensionality reduction towards the sensor, e.g. by selecting data based on specific regions and/or resolutions, less raw data needs to be read in the first place. In embodiments, raw sensor data is recorded "in full" by the sensor, e.g., at full sensor resolution and with all cells (if present), followed by a bandwidth-reducing operation at the sensor, preferably according to a learned dimensionality reduction instruction determined by the acquisition module. In embodiments, raw sensor data is "not recorded in full", i.e. the raw sensor data that is being recorded by the sensor is already reduced in dimensionality, as part of the recording, preferably according to a learned dimensionality reduction instruction determined by the acquisition module. In embodiments, the dimensionality reduction, preferably the bandwidth-reducing operation, is based on a trained region of interest and/or based on a trained non-uniform spatial resolution. In embodiments, data with low relevance for the learning process may, e.g., relate to data that is merely redundant in view of the deep learning application considered, and/or data that provides little added value over the data that was identified as more relevant, and may be discarded in order to reduce bandwidth and/or increase processing power for modeling. In embodiments, this may relate to "blinding irrelevant sensor cells", i.e. taking in only sensor data from relevant sensor cells, while discarding data of the other sensor cells. Overall, the invention provides acquisition wherein relevance is assessed in function of the deep learning application at hand, whereby it may reduce the computational burden on components further downstream, such as the acquisition module and/or a deep learning module comprising the neural network. Also, the invention may lead to improved hardware integration.

According to a second aspect of the present invention, a device (500) is provided comprising:
an acquisition module (53), preferably a hardware-implemented module, more preferably an FPGA, configured for acquiring (1, 1') a reduced-dimensionality image (2) comprising a relevant object (50); and
a feeding interface (54) for feeding a reduced-dimensionality image (2) to a neural network trained with respect to said relevant object (50);
wherein said acquisition module (53) is configured for receiving relevant portions of raw sensor data (11, 11a-d, 50a-c) of said relevant object from one or more sensors (51, 51a) connected to said acquisition module (53) via an acquisition interface (52);
wherein said acquiring comprises reducing a dimensionality of said raw sensor data (11, 11a-d, 50a-c) according to a learned dimensionality reduction learned by means of a first set of training examples (21a-e); said learned dimensionality reduction comprising a bandwidth-reducing operation learned based on said first set of training examples (21a-e) according to an instruction determined by said acquisition module (53) and intended for being performed by one or more respective ones of said sensors (51, 51a), said bandwidth-reducing operation resulting in an amount of data being sent by said respective sensor over said acquisition interface (52) being less than the amount of raw sensor data being recorded by the respective sensor;
wherein preferably said device (500) further comprises a deep learning module (55) comprising said neural network. In embodiments, for at least a first sensor, the relevant portions of raw sensor data relate to all sensor data that can be received by a first sensor, while for a second sensor, a bandwidth-reducing operation is performed. In embodiments, the relevant portions of raw sensor data relate to a bandwidth-reducing operation at the level of each of the sensors.

In embodiments, such a device according to the invention may advantageously be provided as an FPGA. In embodiments, the device is an FPGA that further comprises the deep learning module comprising said neural network. This may provide the advantage of a single FPGA chip for dimensionality reduction and deep learning. Therein, the dimensionality reduction may relate, e.g., to a trained region of interest, and/or a trained non-uniform spatial resolution.

According to a further aspect of the present invention, a system (600) is provided comprising:
the device (500) according to the invention, comprising an acquisition module (53) configured for receiving raw sensor data (11, 11a-d, 50a-c) of a relevant object from one or more sensors (51, 51a) connected to said acquisition module (53) via an acquisition interface (52);
said acquisition interface (52); and
said one or more sensors (51, 51a).

In embodiments, such a system according to the invention may advantageously be provided as an integrated sensor module which produces reduced-dimensionality images and feeds them to further parts of the deep learning architecture. Such a sensor module may greatly enhance integration in hardware design, and, effectively incorporating a part of the deep learning function, may also reduce the requirements on the connection and connection bandwidth between sensor and further parts of the deep learning architecture. In embodiments, the system further comprises the deep learning module comprising said neural network, amounting to a combination of sensor and deep learning functionality. Such a system may provide further hardware integration. Further hardware integration and size reduction may advantageously be provided in embodiments wherein dimensionality reduction and deep learning are implemented in a single FPGA chip, as this may effectively reduce the system hardware to the combination of a sensor and an FPGA.

According to a further aspect of the present invention, a computer program product is provided. The computer program product comprises instructions which, when carried out on a processor, cause the processor to carry out the steps of the method according to the invention.

Preferred embodiments and their advantages are provided in the description and the dependent claims.

### Brief description of the drawings

The present invention will be discussed in more detail below, with reference to the attached drawings.
Fig. 1 illustrates a method according to the prior art.
Fig. 2 shows example methods according to the invention.
Fig. 3 shows example methods with multiple frames or multiple sensors according to the invention.
Fig. 4 illustrates example aspects of the invention.
Fig. 5 shows example methods with multiple sensors according to the invention.
Fig. 6 shows example methods with multiple categories according to the invention.
Fig. 7 shows example methods with pipeline according to the invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification. Furthermore, the reference numerals used throughout this document are not to be construed as limiting the invention, but merely to allow better understanding of the invention.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "raw sensor data" refers to any sensor data recorded by a sensor either directly or indirectly. Hence, the term "raw" is not to be construed as limiting the invention in any way. The term may refer to entirely unprocessed data that is recorded by the one or more sensors, but also to data subject to prior processing taking place at the level of the sensor, as well as data recorded by the sensor that is received in processed form owing to processing after the actual capture of sensing data. Hence, the reduction of dimensionality of raw sensor data may relate to processing of the raw sensor data but also of sensor data derived therefrom. Furthermore, the raw sensor data may originate from the one or more sensors but may also be provided from an external source or from memory. Also, the term "raw sensor data" should not be construed as limiting the origin of data. For instance, any of the first or second set of training examples may be obtained from said one or more sensor but may also be provided from an external source or from memory.

In this document, the term "sensor" may be any means for visual image acquisition, wherein the image may relate to a single frame, preferably 2D or 3D frames, or to a sequence of frames, preferably 2D or 3D frames, e.g., a portion of video. Examples of visual image acquisition are optical instruments such as cameras, operating in the visual spectrum or at least partly outside the visual spectrum, as in the case of IR cameras or UV cameras. Image acquisition may be based on any principle known to the skilled person, relating to, e.g., electromagnetic waves or acoustic waves or any combination thereof. Related, the term "image" may refer to a single frame, preferably a 2D or 3D frame, or to a sequence of frames, preferably 2D or 3D frames, e.g., a portion of video. The sensor may comprise sensor cells, which may be known also as physical pixel arrays, wherein each cell or physical pixel array may comprise, e.g., a red, green, and blue element. In embodiments, the spectrum for the sensor cells extends beyond the visible spectrum, with, e.g., hyperspectral sensor cells, which may relate to a hyperspectral camera. The multitude of sensor cells may be aligned according to some geometry, e.g., a rectangular or hexagonal array.

In this document, the term "PCA" refers to principal component analysis. In preferred embodiments, PCA may provide or contribute to reducing the dimensionality of raw sensor data, preferably as part of performing said bandwidth-reducing operation, by computing the principal components and using these to perform a change of basis on the sensor data, to then use only the first few principal components and omitting the rest, for instance only the first, or only the first and second, or only the first ten, depending on the deep learning inference requirements. Preferably, such PCA is learned by means of a first set of training examples, and then applied to any of the incoming raw sensor data, preferably including the second set of training examples used for training the neural network. Thereby, the application may preferably relate to respective instructions of the acquisition module to respective sensors, whereby the instructions may relate to respective bandwidth-reducing operations. By using only the first few principal components, the amount of data to be transmitted over the sensor interface and processed by the acquisition module and neural network may be reduced, which may lead to, e.g., more efficient resource usage and/or lower power consumption and/or lower battery requirements and/or improved battery life and/or faster deep learning inference.

In this document, the term "FPGA" refers to a field-programmable gate array as known to the skilled person. The FPGA may contain an array of programmable logic blocks, and a hierarchy of reconfigurable interconnects allowing blocks to be wired together. Herein, logic blocks may be configured to perform one or more logic functions, including AND and XOR but preferably also complex combinational functions. In embodiments, the logic blocks also include one or more memory elements. In embodiments, the FPGA is at least partially reconfigurable at runtime. FPGAs being an attractive hardware design choice for image acquisition, the invention is not limited thereto, and implementation may also be done by means of an ASIC.

In this document, the term "ICA" refers to independent component analysis, a blind source separation technique known to the skilled person. In preferred embodiments, ICA or any other form of blind source separation may provide or contribute to reducing the dimensionality of raw sensor data by decomposing the raw sensor data of sensor data derived therefrom, being multivariate data, to independent non-Gaussian signals, and then applying the dimensionality reduction on said independent signals. In examples, dimensionality may be reduced by processing said independent signals in parallel, preferably independently, by means of respective neural networks, which may have reduced size requirements or speed requirements owing to parallelization. Thereby, the respective neural networks may be trained, e.g., on respective reduced-dimensionality training examples, each reduced according to a format of the respective independent signal. In examples, dimensionality may be reduced by learning which independent signals are most relevant for the deep learning inference at hand and prioritizing these. Said prioritizing may relate, e.g., only keeping the most relevant signals and discarding the others. In other examples, it may relate to not further reducing the dimensionality of the most relevant signals, while performing further reduction, e.g., PCA reduction, on the less relevant signals, and/or even discarding some or all of the less relevant signals completely. In examples, ICA is applied in a first stage, and PCA may then be applied to only the first few most relevant signals, e.g., the first, or only the first and second, or only the first ten, depending on the deep learning inference requirements, and the remaining signals are discarded. By focusing on the most relevant signals, the amount of data to be processed by the neural network may be reduced, which may lead to, e.g., more efficient resource usage and/or lower power consumption and/or lower battery requirements and/or improved battery life and/or faster deep learning inference.

In this document, the term "SFA" refers to slow feature analysis, a technique known to the skilled person and set out, e.g., in (F. Creutzig, H Sprekeler; Predictive Coding and the Slowness Principle: An Information-Theoretic Approach. Neural Computation 20(4):1026-1041. doi:10.1162/neco.2008.01-07-455). Slow feature analysis may provide dimensionality reduction for sensor data comprising temporal information and may relate to extracting slowly varying components from quickly varying input signals, thereby learning temporally invariant features. This may be based on, e.g., defining an information-theoretic objective function for temporally local predictive coding. In preferred embodiments, SFA may provide or contribute to reducing the dimensionality of raw sensor data or sensor data derived therefrom by learning temporally invariant features, to then use only those and discard the rest. Preferably, such SFA is learned by means of a first set of training examples comprising temporal information, and then applied to any of the incoming raw sensor data, preferably including the second set of training examples used for training the neural network. In embodiments, SFA may enable the amount of data to be read from the sensor and processed by the acquisition module and neural network to be reduced, which may, in its turn, lead to, e.g., more efficient resource usage and/or lower power consumption and/or lower battery requirements and/or improved battery life and/or faster deep learning inference.

In this document, the term "SoftMax layer" refers to the application of the softmax function to a layer of a neural network. In preferred embodiments, the SoftMax layer is applied at the level of the sensor, e.g., by being comprised in the sensor and/or according to instructions, e.g., MIPI instructions, of the acquisition module. Examples of application of a SoftMax layer for neural networks in deep learning may be found in (B. Yuan, Efficient hardware architecture of softmax layer in deep neural network, 29th IEEE International System-on-Chip Conference (SOCC), 2016, pp. 323-326, doi: 10.1109/SOCC.2C116.7905501). Such a SoftMax layer may be particularly useful for multi-category classification tasks, but entails complex mathematical operations, in contrast to simple mathematical operations such as addition, multiplication and shifting, which are easier to implement in a neural network and require less computational resources. In embodiments, the SoftMax layer may be provided within the sensor. By providing dimensionality reduction at the level of the sensor, the complexity "downstream", i.e. at the level of the acquisition module and neural network, may be reduced, which may advantageously lead to lowered computational resource requirements.

In this document, the term "information correlation" refers to statistical dependence between different portions of the raw sensor data, preferably to correlation between sensor data originating from different sensors. This may relate to correlating multiple images, so as to derive sensor regions where a difference is detected with respect to a reference status of the region. For instance, sensor regions can be identified that remain largely identical over recorded examples, and other sensor regions can be identified that do not remain the same. Herein, the latter sensor regions may relate to a region of interest. In preferred embodiments, this statistical dependence is leveraged by reducing the dimensionality of the raw sensor data. As is clear to the skilled person, by analysing the correlation present in the raw sensor data and/or the correlation between raw sensor data and the relevant object, one may obtain a reduced representation of the sensor data, thereby performing the reduction of dimensionality. This again may advantageously lead to lowered computational resource requirement at the level of the acquisition module and neural network.

In embodiments, dimensionality reduction may relate to dimensionality reduction requiring temporal information at the input, e.g., SFA and/or one or more of PCA, ICA, SoftMaxlayer within sensor, or information correlation. In embodiments, dimensionality reduction may relate to spatial dimensionality reduction not requiring temporal input, e.g. one or more of PCA, ICA, SoftMaxlayer within sensor, or information correlation.

In embodiments, any of PCA, ICA, SFA, SoftMaxlayer within sensor, and information correlation is applied in a first stage, and another one of PCA, ICA, SFA, SoftMaxlayer within sensor, and information correlation is applied in a second stage.

The term neural network, NN, refers to any neural network model. The NN may comprise any or any combination of a multilayer perceptron, MLP, a convolutional neural network, CNN, and a recurrent neural network, RNN. A trained NN relates to training data associated with a neural network based model.

Neural networks may relate to said neural network and/or, if any, to said second neural network used for dimensionality reduction. Neural networks need to be trained with respect to a relevant object, to learn the features that optimally represent the data. Such deep learning algorithms may include a multilayer, deep neural network that transforms input data (e.g., images) to outputs while learning higher level features. Successful neural network models for image analysis are referred to semantic segmentation NNs, and find application in a variety of tasks, which is not limited to semantic segmentation alone, but may also include, e.g., regression. One example is the so-called convolutional neural network (CNN). CNNs contain many layers that transform their input using kernels, also known as convolution filters, consisting of a relatively small sized matrix. Other successful neural network models for image analysis are instance segmentation NNs. As known to the skilled person, instance segmentation NNs differ from semantic segmentation NNs in terms of algorithm and output, even in cases where the input, e.g., the images, are identical or very similar.

In this document, the term "deep learning inference" may refer to any deep learning task carried out by means of said neural network and related to said relevant object. This may relate, e.g., to one or more of object detection, object count, object classification, foreground-background identification, image classification.

In general, semantic segmentation may relate, without being limited thereto, to detecting, for every pixel (in 2D) or voxel (in 3D), to which class the pixel/voxel belong. Instance segmentation, on the other hand, may relate, without being limited thereto, to detecting, for every pixel/voxel, a belonging instance with respect to a plurality of similar objects. It may detect each distinct object of interest in an image.

In embodiments, 2D instance segmentation, preferably operating on 2D images, relates to Mask R-CNN, DeepMask, and/or TensorMask.

In embodiments, 3D instance segmentation, preferably operating on a 3D point cloud generated from 2D images, relates to 3D-BoNet and/or ASIS.

In embodiments, the NN is rotation equivariant. In embodiments, the NN is translation and rotation equivariant.

In embodiments, the NN and/or second NN may relate to a rotation equivariant NN. Such NNs are known for specific applications, see, e.g., the "e2cnn" software library, see (Maurice Weiler, Gabriele Cesa, General E(2)-Equivariant Steerable CNNs, Conference on Neural Information Processing Systems (NeurIPS), 2019).

In embodiments, the NN and/or second NN may comprise any or any combination of a graph NN, a recurrent NN (RNN), a bidirectional neural network (BRNN or BiRNN), a U-net, a Deeplabv3+.

In embodiments, said one or more sensors (51, 51a) each comprise sensor cells; wherein said bandwidth-reducing operation performed by the respective sensor relates to one or more of: blinding of all sensor data of one or more sensor cells; binning with respect to sensor data of one or more sensor cells; subsampling with respect to sensor data of one or more sensor cells. This may relate to dimensionality reduction based on a trained region of interest and/or dimensionality reduction based on a trained non-uniform spatial resolution. This may advantageously allow to reduce (i) bandwidth requirements toward the sensor, the acquisition interface, and the acquisition module, and/or (ii) computational complexity involved in the deep learning inference by the neural network.

In related embodiments, the blinding of one or more sensor cells may alternatively or additionally relate to phase detection auto focus, PDAF.

In related embodiments, the learned dimensionality reduction comprises two or more iterations of learned blinding. This may, e.g., relate to (i) reading out first sensor cells according to a first selection; (ii) process this input, (iii) based thereupon, determine a second selection of sensor cells, and (iv) read out second sensor cells according to said second selection. The first selection may, e.g., correspond to a first, preferably lower, resolution. The second selection may, e.g., correspond to a region of interest determined in the processing step (ii). The low resolution may, e.g., relate to spatial reduction, i.e., spatial selection of cells, but also to reduced sampling width (e.g., double versus single versus binary), i.e., subsampling selection of cells. In embodiments this is combined with corresponding instructions or data commands, e.g., MIPI commands. In embodiments, resolution of depth is further considered.

In embodiments, said one or more sensors (51,51a) comprise at least two sensors (51a), and said bandwidth-reducing operation relates to respective sensor cells of at least two, preferably all, of said at least two sensors. This may, e.g., relate to Example 3 or 5, wherein multiple sensors are considered.

In embodiments, said one or more sensors (51, 51a) each comprise sensor cells, and said learned dimensionality reduction comprises receiving reduced sensor data over said acquisition interface (52) according to a bandwidth-reducing operation. In example embodiments, this relates to a selection of a sub-set of the cells. Said selection preferably corresponds to said learned blinding of sensor data, wherein preferably said acquisition module is a hardware-implemented module, more preferably a field programmable gate array, FPGA, acquisition module. This may advantageously allow to reduce bandwidth requirements toward the sensor, and/or reduced computational requirements for feeding the image to the neural network.

In embodiments, said selection of sensor data is at least partially, preferably entirely, based on sending of a corresponding instruction, preferably MIPI instruction, by the acquisition module (53) to the one or more sensors (51, 51a) and determining, by the one or more sensors (51, 51a) and based upon the instruction, performing a bandwidth-reducing operation to determine the sensor data to be sent to the acquisition module (53). In example embodiments, the said bandwidth-reducing operation may relate to said learned blinding. Such embodiments may advantageously allow further integration of sensor hardware and deep learning hardware, which may lead to reduced footprint and reduced energy consumption.

In embodiments, the learned dimensionality reduction further comprises, apart from the bandwidth-reducing operation at one or more of the sensors, the performing, by said acquisition module (52), a further operation on said sensor data received over said acquisition interface (52), wherein said further operation relates to an aspect of learned dimensionality reduction that is suitable for being carried out at the acquisition module. Thereby, in embodiments, the further operation may relate or even replace the bandwidth-reducing operation carried out at the sensor, but may, in other embodiments, be independent and be in addition to the bandwidth-reducing operation carried out at the one or more sensors. Such further operation may advantageously allow reduced computational requirements for feeding the image to the neural network.

In embodiments, said acquisition module (53) is a hardware-implemented module being a field programmable gate array, FPGA, acquisition module, and wherein said learned dimensionality reduction is at least partially, preferably entirely, carried out by said FPGA. Such embodiments may provide advantageous hardware integration. Alternatively, an ASIC may be considered.

In embodiments, a programming of said field programmable gate array acquisition module is determined based at least partly on an output of a learning of said learned dimensionality reduction for configuring said acquisition means (51, 53) in accordance with said learned dimensionality reduction. Such embodiments may advantageously leverage the programmable nature of FPGAs, contributing to more flexible and/or more compact image acquisition.

In embodiments, said learned dimensionality reduction comprises, preferably consists of, a second neural network different from said neural network, preferably trained by means of said first set of training examples. Such embodiments may provide the advantage of easier configuration by an operator, particularly if a similar NN architecture is chosen for the first and second neural network.

In embodiments, said learned dimensionality reduction is based at least partly on one or more of: principal component analysis, PCA, independent component analysis, ICA, slow feature analysis, SFA, SoftMaxlayer within sensor, information correlation. Advantages thereof are described elsewhere in this document.

In embodiments, the method further comprises: performing (56), based on said reduced-dimensionality image (2) and by means of a deep learning module (55) comprising said neural network, a deep learning inference relating to said object.

In embodiments, said acquisition module (53) and said deep learning module (55) are comprised in a single FPGA. Such embodiments may provide further advantages in terms of integration and compactness.

In embodiments, said instruction determined by the acquisition module is determined by means of a second neural network different from said neural network and trained by means of said first set of training examples.

In embodiments, said neural network being trained with respect to said relevant object (50) relates to being trained on reduced-dimensionality training examples, said reduced-dimensionality training examples preferably obtained by applying said learned dimensionality reduction on a second set of training examples.

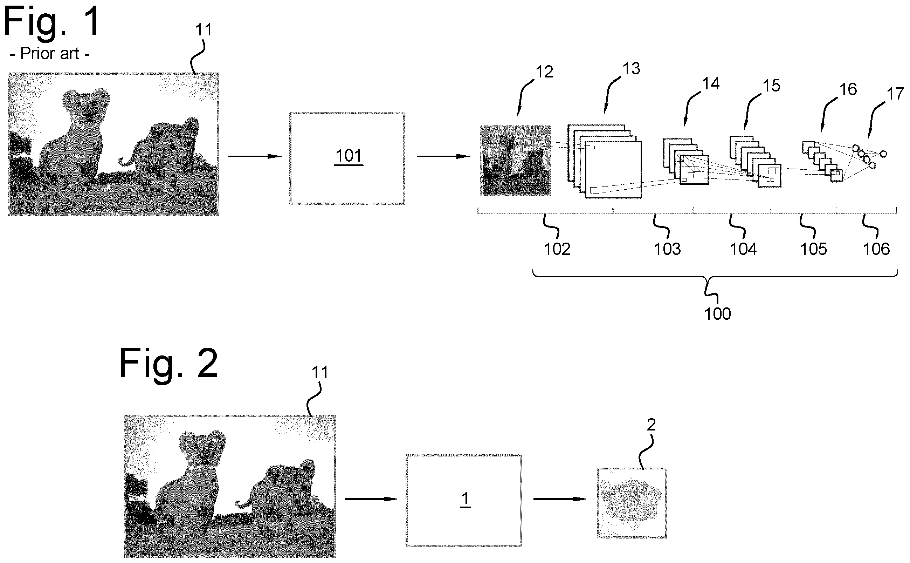

Example embodiments of the invention are described below with reference to Figs. 1-7.

### Examples

In the below, Figures 1-7 are discussed subsequently, corresponding to respective Examples 1-7, which may be devised as separate example embodiments. However, for the sake of presentation, reference numerals are used throughout that may refer to multiple examples at once, in view of the similarity between examples. Hence, the reference numerals are not to be construed as limiting the invention, but merely to allow better understanding of the invention.

Fig. 1 illustrates Example 1, a method according to the prior art, wherein the deep learning pipeline (100) is from (Hua KL, Hsu CH, Hidayati SC, Cheng WH, Chen YJ. Computer-aided classification of lung nodules on computed tomography images via deep learning technique. Onco Targets Ther. 8:2015-2022; 2015; doi:10.2147/OTT.S80733). Raw sensor data (11) being an image of two lions is fed to an image processing module (101), yielding an input layer (12) being the first step of the deep learning pipeline (100). Hence image acquisition relates merely to providing the raw sensor data (11) and processing it (101). The raw sensor data is an image with an original size, original aspect ratio of about 4:3 and a landscape orientation. This original geometry and size are discarded in the processing step (101), by scaling the image to square geometry irrespective of original geometry, and scaling down the image to a predetermined square size, to obtain the input layer (12) of the deep learning architecture.

As discussed in (Hua KL, Hsu CH, Hidayati SC, Cheng WH, Chen YJ. Computer-aided classification of lung nodules on computed tomography images via deep learning technique. Onco Targets Ther. 8:2015-2022; 2015; doi:10.2147/OTT.S80733), in this example, the deep learning architecture relates to a convolutional neural network with a gradient back-propagation method. The pipeline (100) consists of a convolution layer step (102) applied to the input layer (12), followed by a sub-sampling layer step (103) with respect to four feature maps (13), a convolution layer step (104) with respect to six feature maps (14), a sub-sampling layer step (105) with respect to six feature maps (15) and a fully connected multilayer perceptron, MLP, step (106) with respect to six feature maps (16), yielding trained neurons (17).

The standard pipeline (100) is however suboptimal in terms of computational resource usage, because the input layer (12) received at the input has lost a lot of information when compared to its original (11), due to the downsizing and square geometry, while still containing a lot of information that is of little relevance.

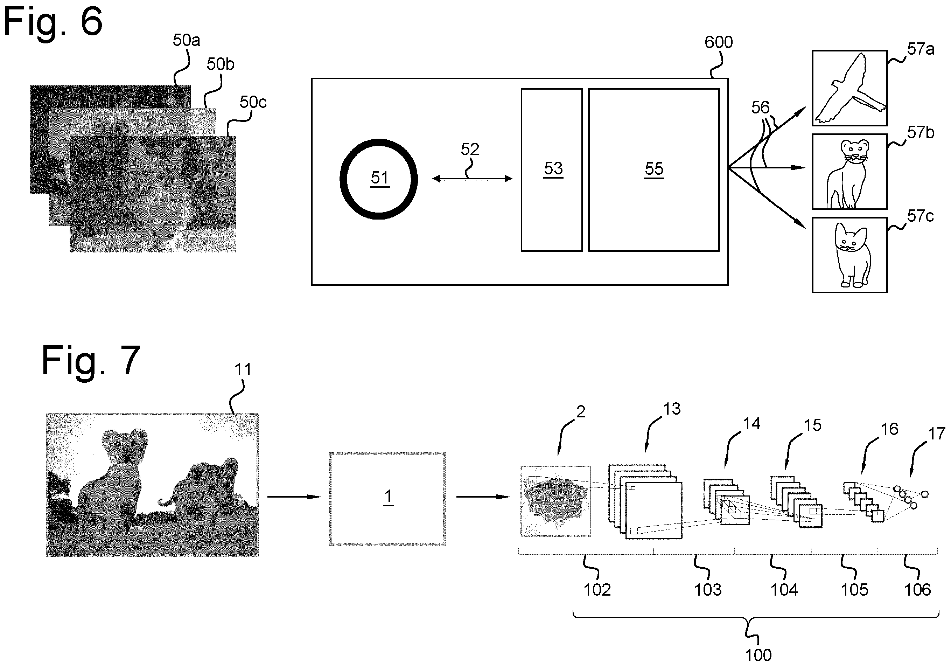

Fig. 2 shows example methods according to the invention with Example 2, that is best understood in comparison with Fig. 1 and Fig. 7. Instead of processing (101) the raw sensor data (11) according to Example 1, the invention provides dimensionality reduction (1), yielding a reduced-dimensionality image (2). The reduced-dimensionality image (2) is a compact representation of the raw image data ready to be fed to a trained neural network. The dimensionality is reduced (1) according to automated PCA trained based on a second training set which may or may not be different from the training set with which the neural network is trained. While the data present in the reduced-dimensionality image (2) may be harder to interpret visually by a human, it is more effective for deep learning applications. Related, it may be smaller in data size (expressed in bytes) when compared to the input layer (12) of Figure 1 for obtaining the same deep learning performance in terms of computation or speed. Additionally, it may be acquired faster, in view of the bandwidth-reducing operation that is pushed "upstream" to the level of the sensors. Moreover, while the approach of Fig. 2 is generic, and the reduced-dimensionality image (2) may be fed to any deep learning architecture involving a neural network, it may as well be fed to the pipeline (100) of Fig. 1. This is illustrated in Example 7 and corresponding Fig. 7, which differs from Fig. 1 only in that acquisition is according to the invention, with a reduced-dimensionality image (2), instead of the input layer (12) of the prior art example, i.e., Example 1.

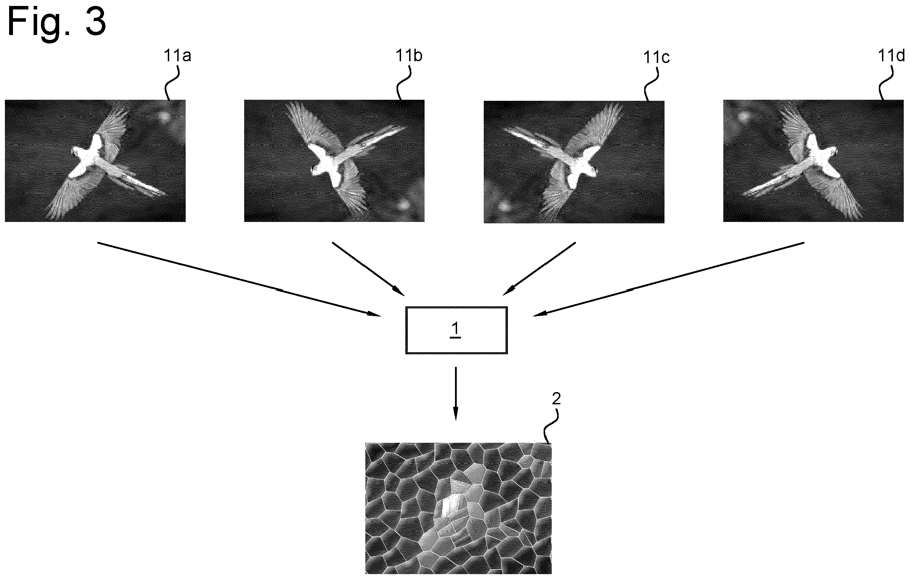

Fig. 3 shows example methods according to Example 3, with multiple frames (11a-11d) or multiple sensors according to the invention. When considered as multiple frames (11a-11d), this may relate to a single sensor acquiring four subsequent frames of raw sensor data of a relevant object being a parrot. When considered as multiple sensors, this may relate to four sensors acquiring images of raw sensor data of a relevant object being a parrot from four different angles. Regardless of whether multiple frames or multiple sensors are considered, a dimensionality reduction (1) is provided to determine a reduced-dimensionality image (2), which is ready to be fed to a deep learning architecture comprising a neural network. In embodiments with multiple sensors, this may relate to respective bandwidth-reducing operations for each of the sensors. In embodiments with multiple frames at a single sensor, this may relate to respective bandwidth-reducing operations at the same sensor, whereby the operations may be identical or non-identical.

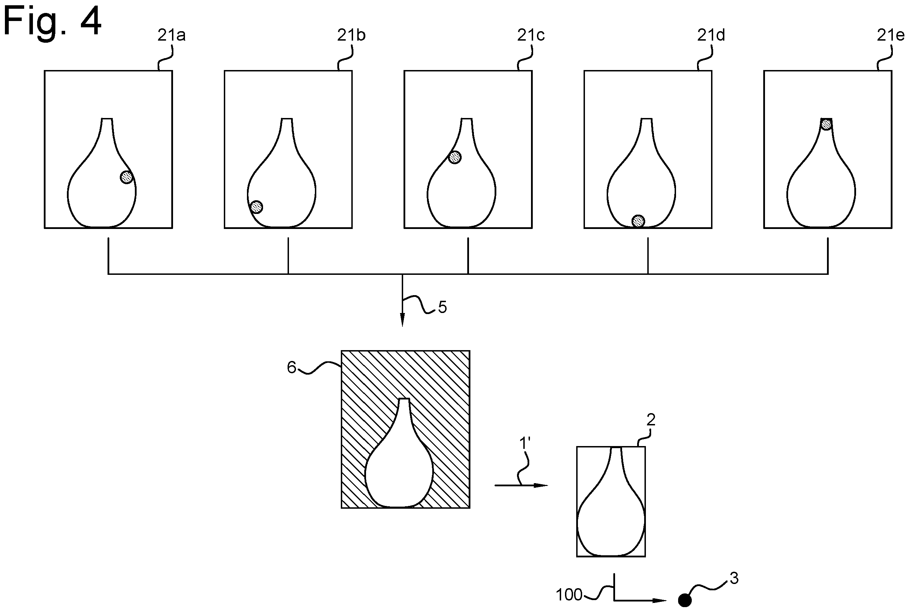

Fig. 4 illustrates example aspects of the invention, according to Example 4. This example highlights the training (5) of the dimensionality reduction (1'), which involves a first training set (21a-e) of five images of a vase comprising a small contrasting marking (3) on its outer surface, and some background texture (not shown on the image). The deep learning inference to be made relates to detecting the marking. The automated training (5) of the dimensionality reduction, preferably based on PCA or ICA or a second neural network, relates to identifying a mask (6), defining a non-rectangular shape as region of interest for detecting the vase. The deep learning pipeline (100), which may be the same as that of Example 1 or 7 but may also be different, is hence fed with only the information according to the mask, i.e., the non-rectangular reduced-dimensionality image (2), which has the shape of a vase. Owing to the drastic reduction of the number of pixels, and the removal of background texture, the deep learning task is greatly simplified. The acquisition may be faster owing to the bandwidth-reducing operation being carried out at the level of the sensor. The output of the deep learning pipeline is the localization and/or detection of the presence of the marking (3).

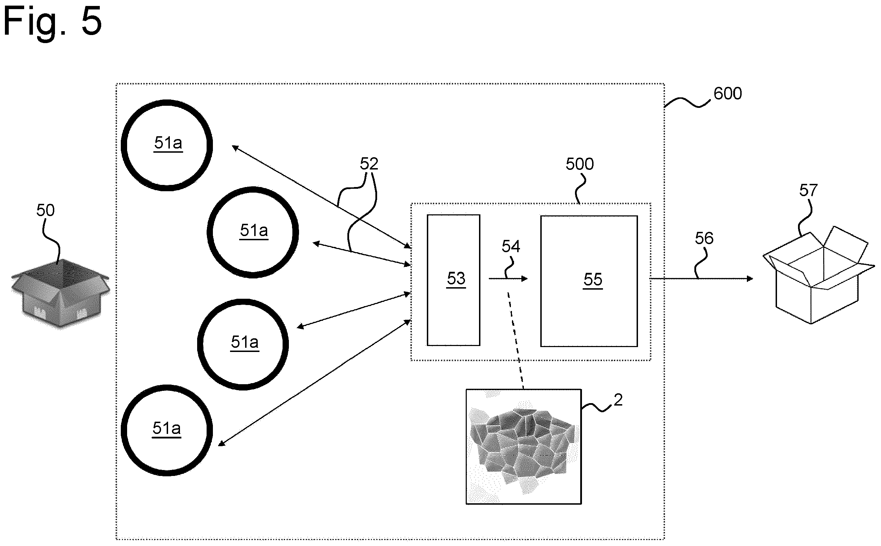

Fig. 5 shows example methods with multiple sensors according to the invention, with Example 5. Furthermore, Fig. 5 also illustrates the device (500) comprising an acquisition module (53) and a deep learning module (55) comprising said neural network, both integrated in the same FPGA (500). The acquisition module (53) is configured for acquiring (1, 1') the reduced-dimensionality image (2) comprising the relevant object (50) being a cardboard box. Logically, while completely embedded in the FPGA, the device comprises a feeding interface (54) for feeding a reduced-dimensionality image (2) to the neural network trained with respect to said relevant object (50). The acquisition module (53) is configured for receiving relevant portions of raw sensor data of a sample of said relevant object, from four sensors (51a) connected to said acquisition module (53). The acquiring comprises reducing the dimensionality of said raw sensor data (11, 11a-d, 50a-c), preferably for feature selection or feature extraction, according to a learned dimensionality reduction learned by means of a first set of training examples. This is performed by means of a bandwidth-reducing operation at the sensors, according to MIPI instructions originating from the acquisition module. The neural network is trained with respect to said relevant object (50) on reduced-dimensionality training examples obtained by applying said learned dimensionality reduction on a second set of training examples. In this example, the MIPI interface of the four sensors being four cameras (51a) is used over the acquisition interface (52). This may allow to reduce the data flowing over this interface. This, in turn, enables faster detection (56) and/or higher effective use of the limited capacity of the FPGA (500). Particularly, the MIPI interface allows reducing the amount of data flowing from the sensors, according to a learned dimensionality reduction. The FPGA (500), cameras (51a) and acquisition interface (52) together define the system used for integrated acquisition and deep learning.

Fig. 6 shows example methods according to Example 6, and is mostly the same as Example 5, including the use of MIPI interface over the interface (52) and the reduction of the amount of data flowing to the acquisition module, except that now multiple frames (50a-c) according to multiple categories and a single camera (51) are considered. Moreover, all elements of the system (600) are fully integrated, e.g., in a smartphone. The outcome of the deep learning inference is the detection of a respective bird, lion, and cat (57a-57c).

Fig. 7 shows example methods with pipeline according to the invention with Example 7, which is already discussed above in the discussion of Figure 2.

In this document, examples are given preferably involving one or more FPGAs. However, as a design alternative also ASICs are equally contemplated instead of or in addition to FPGAs, and all combinations of FPGAs and ASICs are hence disclosed herewith.

## Claims

1. A method for image acquisition, comprising:
acquiring (1, 1') a reduced-dimensionality image (2) comprising a relevant object (50) by means of an acquisition means (51, 52, 53) comprising one or more sensors (51, 51a) for recording raw sensor data (11, 11a-d, 50a-c) of said relevant object (50);
feeding said reduced-dimensionality image (2) to a neural network trained with respect to said relevant object (50);
wherein said acquisition means further comprises an acquisition module (53), preferably a hardware-implemented module, and an acquisition interface (52) connecting said one or more sensors to said acquisition module (53);
wherein said acquiring comprises reducing a dimensionality of said raw sensor data (11, 11a-d, 50a-c) according to a learned dimensionality reduction learned by means of a first set of training examples (21a-e), said learned dimensionality reduction comprising a bandwidth-reducing operation learned based on said first set of training examples (21a-e) and being performed by one or more respective ones of said sensors (51, 51a), said bandwidth-reducing operation resulting in an amount of data being sent by said respective sensor over said acquisition interface (52) being less than the amount of raw sensor data being recorded by the respective sensor.

2. Method of claim 1, wherein said bandwidth-reducing operation being performed by the respective sensor is at least partially, preferably entirely, based on an instruction, preferably a MIPI instruction, determined by the acquisition module (53), said instruction being received over said acquisition interface (52).

3. Method of claim 2, wherein said instruction comprises a MIPI instruction, preferably is a MIPI instruction.

4. Method of claims 2-3, wherein said instruction determined by the acquisition module is determined by means of a second neural network different from said neural network and trained by means of said first set of training examples.

5. Method of claims 1-4, wherein said acquisition module (53) is a hardware-implemented module comprising a field programmable gate array, FPGA.

6. Method of claim 5, wherein a programming of said field programmable gate array acquisition module is determined based at least partly on an output of a learning of said learned dimensionality reduction for configuring said acquisition means (51, 53) in accordance with said learned dimensionality reduction.

7. Method of claim 1, wherein said neural network being trained with respect to said relevant object (50) relates to being trained on reduced-dimensionality training examples, said reduced-dimensionality training examples preferably obtained by applying said learned dimensionality reduction on a second set of training examples.

8. Method of claims 1-7, wherein said one or more sensors (51, 51a) each comprise sensor cells; wherein said bandwidth-reducing operation performed by the respective sensor relates to one or more of: blinding of all sensor data of one or more sensor cells; binning with respect to sensor data of one or more sensor cells; subsampling with respect to sensor data of one or more sensor cells.

9. Method of claims 1-8, wherein said one or more sensors (51,51a) comprise at least two sensors (51a), and wherein said bandwidth-reducing operation relates to respective sensor cells of at least two, preferably all, of said at least two sensors.

10. Method of claims 1-9, wherein said learned dimensionality reduction, preferably said bandwidth-reducing operation, is based at least partly on one or more of: principal component analysis, PCA, independent component analysis, ICA, slow feature analysis, SFA, SoftMaxlayer within sensor, information correlation.

11. Method of claim 1-10, further comprising:
performing (56), based on said reduced-dimensionality image (2) and by means of a deep learning module (55) comprising said neural network, a deep learning inference relating to said object.

12. Method of claim 11, wherein said acquisition module (53) and said deep learning module (55) are comprised in a single FPGA.

13. A device (500) comprising:
an acquisition module (53), preferably a hardware-implemented module, more preferably an FPGA, configured for acquiring (1, 1') a reduced-dimensionality image (2) comprising a relevant object (50); and
a feeding interface (54) for feeding the reduced-dimensionality image (2) to a neural network trained with respect to said relevant object (50);
wherein said acquisition module (53) is configured for receiving relevant portions of raw sensor data (11, 11a-d, 50a-c) of said relevant object from one or more sensors (51, 51a) connected to said acquisition module (53) via an acquisition interface (52);
wherein said acquiring comprises reducing a dimensionality of said raw sensor data (11, 11a-d, 50a-c) according to a learned dimensionality reduction learned by means of a first set of training examples (21a-e), said learned dimensionality reduction comprising a bandwidth-reducing operation learned based on said first set of training examples (21a-e) according to an instruction determined by said acquisition module (53) and intended for being performed by one or more respective ones of said sensors (51, 51a), said bandwidth-reducing operation resulting in an amount of data being sent by said respective sensor over said acquisition interface (52) being less than the amount of raw sensor data being recorded by the respective sensor; and
wherein preferably said device (500) further comprises a deep learning module (55) comprising said neural network.

14. A system (600) comprising:
the device (500) according to claim 13, comprising an acquisition module (53) configured for receiving raw sensor data (11, 11a-d, 50a-c) of a relevant object from one or more sensors (51, 51a) connected to said acquisition module (53) via an acquisition interface (52);
said acquisition interface (52); and
said one or more sensors (51, 51a).

15. A computer program product comprising instructions which, when carried out on a processor, cause the processor to carry out the steps of the method according to claims 1-12.
